## Europäisches Patentamt

## European Patent Office

## Office européen des brevets

(19)

(11) Veröffentlichungsnummer: **0 164 489**
**B1**

# EUROPÄISCHE PATENTSCHRIFT

(12)

(45) Veröffentlichungstag der Patentschrift:
**15.11.89**

(21) Anmeldenummer: **85101014.0**

(22) Anmeldetag: **31.01.85**

(51) Int. Cl.⁴: **B 02 C 18/06,** A 01 F 29/06,
B 27 L 11/00, B 02 C 18/40

(54) Vorrichtung zum Zerkleinern von körnigen und/oder faserigem Gut.

(30) Priorität: 31.01.84 DE 3403201
31.01.84 DE 3403200
21.03.84 DE 3410339
21.03.84 DE 3410338
06.12.84 DE 3444502
06.12.84 DE 3444504

(43) Veröffentlichungstag der Anmeldung:
18.12.85 Patentblatt 85/51

(45) Bekanntmachung des Hinweises auf die Patenterteilung:
15.11.89 Patentblatt 89/46

(84) Benannte Vertragsstaaten:
AT CH DE FR LI SE

(56) Entgegenhaltungen:
CH-A-266 380
CH-A-544 581
DE-A-3 324 467
DE-B-1 403 858
DE-B-2 240 689
DE-C-268 364
US-A-601 712
US-A-1 281 596

(73) Patentinhaber: Wieneke, Franz, Prof. Dr.- Ing.,
August- Lange- Strasse 14, D-3406 Bovenden (DE)

(72) Erfinder: Wieneke, Franz, Prof. Dr.- Ing., August-
Lange- Strasse 14, D-3406 Bovenden (DE)

(74) Vertreter: Schiller, Walter, Dr., Kanzlei Münich,
Steinmann, Schiller Willibaldstrasse 36- 38,
D-8000 München 21 (DE)

**Beschreibung**

Die Erfindung bezieht sich auf eine Vorrichtung zum Zerkleinern von körnigem und/oder faserigem Gut gemäß dem Oberbegriff des Patentanspruchs 1.

Derartige Vorrichtungen werden zum Aufbereiten und Zerkleinern von biologischem Gut, wie Holzknüppeln, Stengeln, Halmen oder Zweigen sowie Baumrinden, aber auch zum Zerkleinern von Hausmüll und/oder Kunststoffabfällen eingesetzt. Die Zerkleinerung des Guts soll in der Regel entweder eine sogenannte Brikettierung oder ein schnelleres Verrotten im Boden, auf Mullhalden etc. ermöglichen.

Eine Vorrichtung gemäß dem Oberbegriff des Patentanspruchs 1 ist aus der US-A 1 281 598 bekannt. Bei dieser bekannten Vorrichtung wird das Gut durch die Bewegung des Rotors in Verbindung mit einer als Gegenschneide ausgebildeten Leiste zerkleinert. Hierdurch erfolgt jedoch - wie erfindungsgemäß erkannt worden ist - keine gleichmäßige Zerkleinerung des Guts, da jedes Teilchen lediglich einem einzigen Zerkleinerungsvorgang ausgesetzt ist. Darüberhinaus ist der Leistungsbedarf der bekannten Vorrichtung groß.

Weiterhin ist aus der DE-A 33 24 467 eine Vorrichtung anderer Gattung bekannt, bei der das zu zerkleinernde Gut mittels einer Zufuhrschnecke einem Rotor zugeführt wird, der als Hammermühle ausgebildet ist. In einer nachfolgenden Stufe wird mittels Quetsch-, Zerfaserungs- oder Mahlwerkzeugen das in der Hammermühle zerkleinerte Gut nochmals weiter zerkleinert.

Das feinst-zerkleinerte Gut kann dann beispielsweise über ein Wurfgebläse, das als Ausschuborgan dient, ausgeworfen werden.

Es hat sich jedoch herausgestellt, daß diese bekannte Vorrichtung beispielsweise zum Abfräsen von Strohballen etc. nicht geeignet ist, da das Stroh büschelweise eingezogen und so nicht zerkleinert wird.

Ferner sind beide vorstehend erwähnten Vorrichtungen zum Zerkleinern von Holz-Knüppeln oder anderen harten Gegenständen nur bedingt geeignet.

Letztlich benötigen die bekannten Vorrichtungen in jedem Falle ein "aktives" Zufuhrorgan, beispielsweise eine Zufuhrschnecke, um das zu zerkleinernde Gut dem Rotor zuzuführen.

Der Erfindung liegt die Aufgabe zugrunde, eine Vorrichtung zum Zerkleinern von körnigem und/oder faserigem Gut anzugeben, bei der das zu zerkleinernde Gut sicher in die Zerkleinerungsvorrichtung eingezogen und dort bei geringem Leistungsbedarf auf die gewünschte Größe zerkleinert wird.

Eine erfindungsgemäße Lösung dieser Aufgabe ist mit ihren Weiterbildungen in den Ansprüchen gekennzeichnet.

Gemäß Anspruch 1 wird eine an sich bekannte spanende Zerkleinerung zu feinen Spänen und gröberen Teilen mit einer Nachzerkleinerung überlagert: dies wird dadurch erreicht, daß die Zerkleinerungswerkzeuge des Rotors aus feinzahnigen, taumelnd angeordneten Werkzeugen bzw. feinzahnigen Schneidleisten bestehen, und auf der Innenseite des Rotorgehäuses Leisten vorgesehen sind, die eine Führung und ein zusätzliches Schneiden bzw. Zerkleinern des zu zerkleinernden Guts bewirken. Hierdurch wird erreicht, daß das zu Zerkleinernde Gut so lange der Einwirkung der rotierenden Werkzeuge in Verbindung mit den Leisten, die als Gegenschneide wirken, unterliegt, bis es - in Abhängigkeit von dem durch die Leistenanordnung vorgegebenen Aufbereitungspfad - die gewünschte Größe erreicht hat.

Durch die Feinzahnung der taumelnd rotierenden Werkzeuge wird der Leistungsbedarf der Vorrichtung relativ niedrig gehalten, da durch den hohen örtlichen Druck der Zähne ein hoher Wirkungsgrad erreicht wird.

In den Ansprüchen 2 bis 6 sind bevorzugte Ausgestaltungen angegeben, durch die sich der gewünschte "lange Aufbereitungspfad mit fortlaufender Zerkleinerung" ergibt.

Durch die in den Ansprüchen 7 und 8 gekennzeichneten Siebe werden im wesentlichen zwei unterschiedliche Wirkungen erzielt:

Durch die erfindungsgemäße Ausbildung der Zerkleinerungsvorrichtung wird das zu zerkleinernde Gut einer mehrfachen Einwirkung der Zerkleinerungswerkzeuge bzw. der Leisten auf der Innenwand des Rotorgehäuses ausgesetzt. Dabei läßt sich insbesondere dadurch erreichen, daß vor dem Ausschuborgan ein Loch- oder Streifensieb angeordnet wird, das nur zerkleinertes Gut, dessen Größe eine bestimmte Größe nicht überschreitet, ausgestoßen wird (Anspruch 8).

Andererseits läßt sich durch die im Anspruch 7 angegebene Anordnung von Loch- oder Streifensieben mit unterschiedlichen Öffnungen längs des Aufbereitungspfads, wobei zu Beginn des Aufbereitungspfades die Öffnungen mit kleinster Größe und am Ende die Öffnungen mit größter Größe vorgesehen sind, erreichen, daß bereits zu Beginn sehr stark zerkleinertes Gut nicht noch durch den gesamten Aufbereitungspfad "mitgeschleppt" werden muß und damit der Leistungsbedarf der Vorrichtung erhöht wird. Darüberhinaus ergibt sich auch die Möglichkeit, das zerkleinerte Gut in mehreren Fraktionen mit unterschiedlicher Größe zu erhalten.

In den Ansprüchen 9 bis 14 sind mögliche Ausführungsformen für die feinzahnigen Zerkleinerungswerkzeuge angegeben. Je nach zu zerkleinerndem Material kann für eine erfindungsgemäße Zerkleinerungsvorrichtung die jeweils am besten geeignete Ausführung gewählt werden. Dabei hat die Vorrichtung gemäß Anspruch 11 insbesondere den Vorteil, daß durch die pendelnde Aufhängung der Zerkleinerungswerkzeuge diese beim Auftreffen auf Fremdkörper, wie Steine etc. nicht beschädigt werden.

Die einziehende Wirkung der Feinzahn-Profilierung wird durch taumelnd angeordnete Sägescheiben verstärkt, die zur Drehachse exzentrisch angeordnet sind. Damit wirkt sowohl auf das von oben eingeführte Material als auch auf schräg von oben eingesteckte Stengel oder Hölzer eine einziehende Kraftkomponente, die zu einem selbsttätigen gleichmäßigen Einzug führt (Anspruch 12).

Bei der im Anspruch 13 angegebenen erfindungsgemäßen Weiterbildung bestehen die Zerkleinerungswerkzeuge aus Zahnreihen, die auf einem trommel- oder kegelstumpfförmigen Rotor aufgesetzt sind. Diese Anordnung hat den Vorteil, einer hohen mechanischen Stabilität, so daß die erfindungsgemäße Zerkleinerungs-vorrichtung auch zum Zerkleinern von harten Gegenständen eingesetzt werden kann.

Bei der in Anspruch 15 gekennzeichneten Weiterbildung sind zwischen den Sägeblättern oder Sägescheiben Stützscheiben angeordnet, die von den Sägeblättern bzw. Sägescheiben um Zahntiefe überragt werden. Diese Anordnung hat insbesondere beim Abfräsen von Strohballen etc. den Vorteil, daß die Stützscheiben ein Einziehen des abgefrästen Strohs verhindern. Damit wird bei geringem Leistungsbedarf ein gleichmäßiger Schnitt sichergestellt.

Durch die Ausbildung der Stützscheiben als Distanzscheiben wird die Stabilität der Vorrichtung weiter erhöht.

Die Erfindung wird nachstehend anhand von Ausführungsbeispielen unter Bezugnahme auf die Zeichnung näher beschrieben, in der zeigen:

Fig. 1 und 2 einen Querschnitt und einen Längsschnitt durch ein erstes Ausführungsbeispiel der Erfindung;
Fig. 3 und 4 einen Querschnitt und einen Längsschnitt durch ein zweites Ausführungsbeispiel;
Fig. 5 und 6 Einzelheiten aus Fig. 3 und 4;
Fig. 7 und 8 Beispiele für Leistenanordnungen;
Fig. 9 ein weiteres Ausführungsbeispiel;
Fig. 10 und 11 ein Ausführungsbeispiel mit zweistufiger Zerkleinerung;
Fig. 12 die zu diesem Ausführungsbeispiel gehörige Leistenanordnung;
Fig. 13 bis 17 Modifikationen des zweiten Ausführungsbeispiels;
Fig. 18 bis 24 verschiedene erfindungsgemäße Rotoren;
Fig. 25 und 26 ein weiteres Ausführungsbeispiel und die zugehörige Leistenbelegung, und
Fig. 27 bis 31 ein Ausführungsbeispiel für eine kombnierte Vorrichtung.

In den im folgenden beschriebenen Figuren sind gleiche Teile immer mit den selben Bezugszeichen versehen. Deshalb wird bei der Vorstellung der einzelnen Figuren auf eine erneute Beschreibung bereits beschriebener Teile verzichtet.

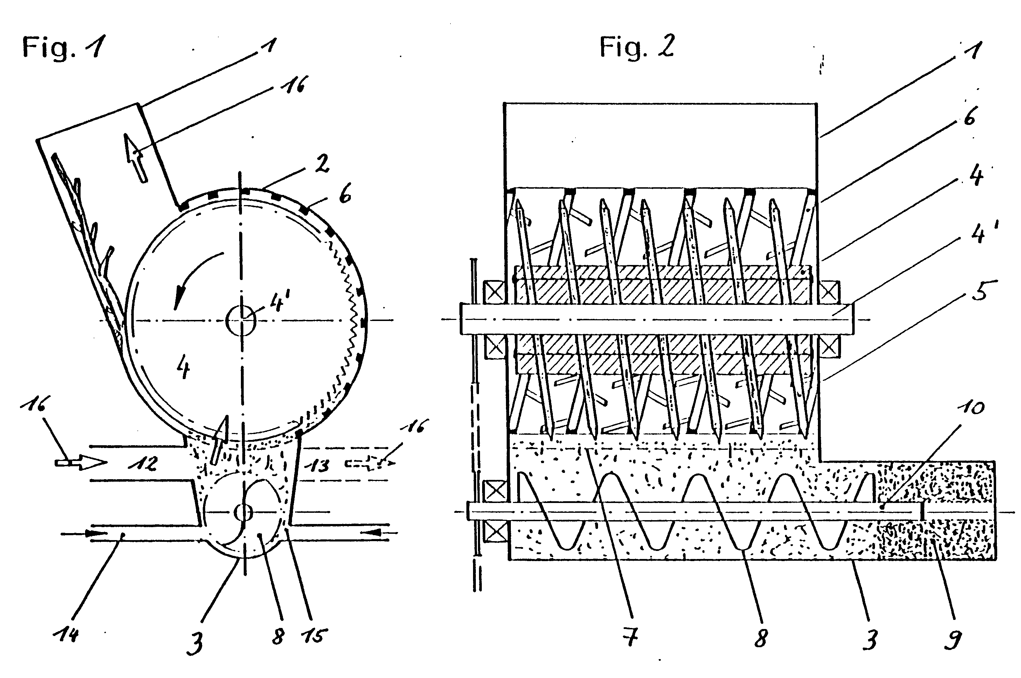

Die Figuren 1 und 2 zeigen ein erstes Ausführungsbeispiel der Erfindung. Die erfindungsgemäße Vorrichtung zum Zerkleinern von körnigem und/oder faserigem Gut weist ein Gehäuse auf, das aus drei Teilen, nämlich einem Einführschacht 1 für das zu zerkleinernde Gut, einem Rotorgehäuse 2 und einem Förderorgan-Gehäuse 3 besteht.

Im dem Gehäuse 2 befindet sich ein Rotor 4, der beispielsweise über eine nicht näher dargestellte Zapfwelle von einem Motor angetrieben wird. Natürlich ist es aber auch möglich, den Rotor 4 mittels eines Motors, beispielsweise eines Verbrennungsmotors oder eines Elektromotors direkt anzutreiben. Auf dem Rotor 4 sind "taumelnd" zur Rotorachse 4' Sägescheiben 5 angeordnet. Mit "taumelnd" ist gemeint, daß die Sägescheiben 5 nicht senkrecht auf der Achse 4' des Rotors 4 stehen.

An der Innenwand des Rotorgehäuses 4 befinden sich Leisten 6, die eine Leit- und Zerkleinerungsfunktion haben und nachfolgend noch im einzelnen beschrieben werden.

Der Einführschacht 1 verläuft in etwa tangential zum Rotor 4 von oben nach unten und ist so ausgebildet, daß das zu zerkleinernde körnige und/oder faserige Gut, wie Knüppel, Stengel, Halme oder Zweige in ihn eingeworfen oder mittels eines Förderbandes eingeleitet werden kann.

Im Innenraum des Förderorgan-Gehäuses 3, der über Sieblöcher 7 mit dem Innenraum des Rotorgehäuses 2 verbunden ist, befindet sich eine Preßschnecke 8, die das in die Schnecke einfallende Material zu einem Brikettstrang 9 verdichtet und den Brikettstrang ausschiebt. Die Welle 10 der Preßschnecke 8 reicht dabei über das Ende der eigentlichen Preßschnecke 8 hinaus, so daß in dem ausgestoßenem Brikettstrang eine Röhre verbleibt, die die Nachtrocknung oder Verfeuerung begünstigt.

Ferner weist das Gehäuse 3 vier Leitungsstutzen 12, 13, 14 und 15 auf. Durch den Leitungsstutzen 12 kann warme Luft oder Gas (Pfeil 16) eintreten, die das zerspante Gut nachtrocknen. Diese Gase können im Querstrom durch den Stutzen 13 oder durch den Einführschacht 1 wieder austreten (Pfeile 16).

Durch die Stutzen 14 und 15 können ein oder mehrere Zuschlagstoffe eingeführt werden, wie dies beim Verdichten oder Brikettieren bekannt ist: Beispielsweise kann bei der Herstellung von zur Verfütterung bestimmten Briketts Ammoniumlactat und bei der Herstellung von zum Verbrennen bestimmten Briketts Kalk zugegeben werden.

Die erfindungsgemäße Vorrichtung zum Zerkleinern von körnigem und/oder faserigem Gut arbeitet wie folgt:

Das zu zerkleinernde Gut wird in den Einführschacht 1 eingeführt. Da der Schacht 1 in etwa tangential zum Rotor von oben nach unten verläuft, wird das Gut von den Zähnen der Sägescheiben 5 eingezogen, wobei die Eigenmasse des Guts diesen Vorgang einleitet und unterstützt. Da aufgrund der taumelnden Anordnung der Sägescheiben 5 diese den gesamten Querschnitt des Einführschachts 1 überstreichen, wird ein Aufteilen oder Absägen des eingeführten Materials und damit eine ungenügende Zerkleinerung, wie dies bei einer parallelen Scheibenanordnung der Fall wäre, verhindert. Durch die auf der Innenwand des Rotorgehäuses 3 angeordneten Leisten 6 werden auch quer eingeführte Knüppel und Zweige, die zunächst nur teilweise zerkleinert in den Spalt zwischen den Sägescheiben 5 und die Gehäuseinnenwand gelangen, nachzerkleinert, da sie an den Leisten 6 einen Widerstand finden. Die Größe der Sieblöcher 7 bestimmt dabei den Feinheitsgrad der Nachzerkleinerung.

Die Sägespäne und das nachzerkleinerte Gut fallen durch die Sieblöcher 7 in den Innenraum des Förderorgan-Gehäuses 3 und werden - wie bereits ausgeführt - von der Preßschnekke 8 zu einem Brikettstrang 9 verdichtet.

Das vorstehend beschriebene Ausführungsbeispiel der Erfindung ist insbesondere dann uneingeschränkt geeignet, wenn Holz- und sonstige biologische Abfälle feinst zerkleinert und über das Lochsieb 7 entnommen werden sollen.

Es hat sich jedoch herausgestellt, daß das vorstehend beschriebene Ausführungsbeispiel der Erfindung beispielsweise zum Abfräsen von Halmgutballen nicht uneingeschränkt geeignet ist.

Beim Abfräsen von Halmgutballen mit feinverzahnten Werkzeugen wird - wie erfindungsgemäß erkannt worden ist - das Halmgut stoßweise abgenommen und damit ungleichmäßig zerkleinert.

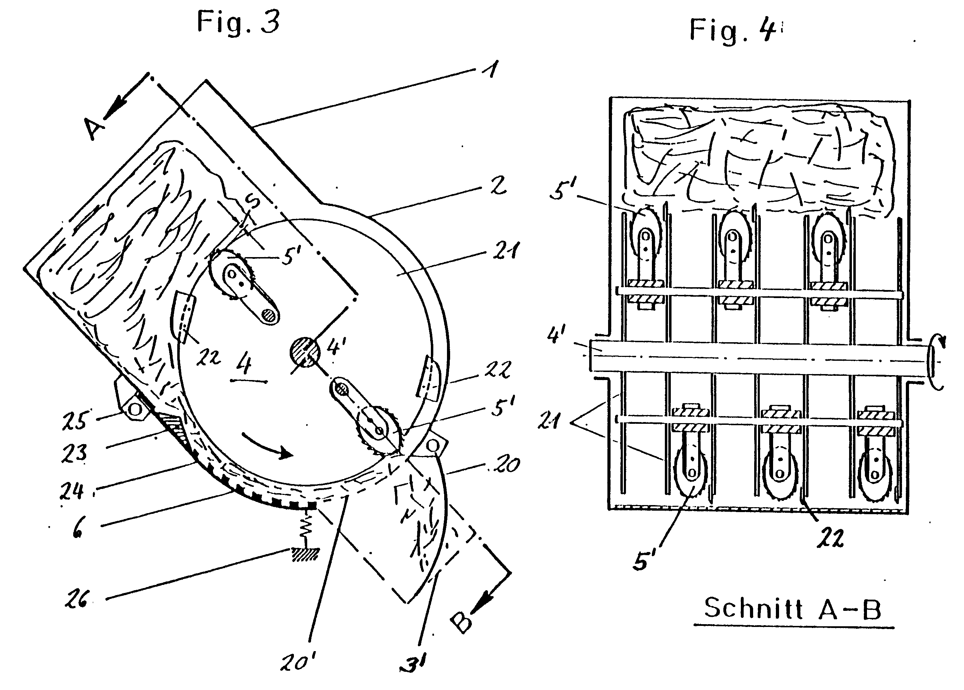

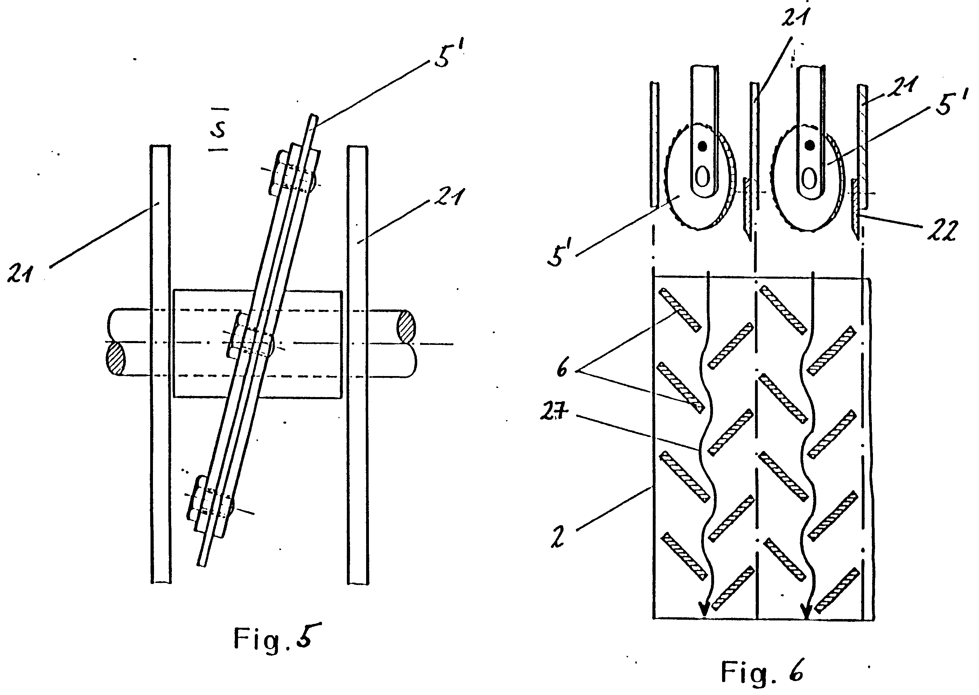

Die Figuren 3 und 4 zeigen ein zweites Ausführungsbeispiel der Erfindung, das insbesondere zum Abfräsen zum Halmgut geeignet ist, dessen Anwendung aber natürlich nicht hierauf beschränkt ist.

Gegenüber dem in den Figuren 1 und 2 gezeigten Ausführungsbeispiel weist das zweite Ausführungsbeispiel folgende Änderungen auf:

Anders als beim ersten Ausführungsbeispiel trägt der Rotor 4 eine Vielzahl von kleinen, pendelnd aufgehängten Sägeblättern 5' oder feingezahnten Leisten, die ebenfalls taumelnd angeordnet sind, d.h. die Sägeblätter 5' bzw. die Messerleisten stehen nicht senkrecht auf der Achse 4' des Rotors 4.

Fig. 5 zeigt vergrößert ein derartiges Sägeblatt 5'. Zwischen den Sägeblättern 5' sind am Rotor 4 Scheiben 21 befestigt, die auf der Achse 4' des Rotors senkrecht stehen, und die die einzelnen Sägeblätter trennen und von diesen um Zahntiefe s überragt werden. An den Scheiben 21 sind Messer 22 angebracht, die den Halmgutballen einschlitzen, damit die Sägeblätter 5' das Halmgut leichter in gleichmäßigen Streifen abnehmen können. Ferner ist ein zustellbarer Heil 23 vorgesehen, der als Gegenschneide zu den gezahnten Werkzeugen, d.h. den Sägeblättern wirkt.

Um Beschädigungen der erfindungsgemäßen Vorrichtung durch Fremdkörper etc. zu vermeiden, ist der Teil 24 des Gehäuses 2, auf dem die Leisten 6 angebracht sind, mittels eines Scharniers 25 an dem Gehäuse 2 angelenkt und durch eine Feder 26 abgestützt, so daß er beim Durchlaufen von Fremdkörpern ausweichen kann.

Darüberhinaus wird das zerkleinerte Gut bei diesem Ausführungsbeispiel nicht mittels einer Preßschnecke verdichtet und zur nächsten Verarbeitungsstation befördert; vielmehr sind bei dem zweiten Ausführungsbeispiel ein mit einer Klappe 20 verschließbarer Auswurfkanal 3' sowie eine nicht näher dargestellte seitliche Ausschuböffnung im Rotorgehäuse 2 vorgesehen, durch die das zerkleinerte Gut in ein seitlich angeordnetes Gebläse austritt, wenn der Auswurfkanal 3' mittels der Klappe 20 geschlossen ist (Stellung 20').

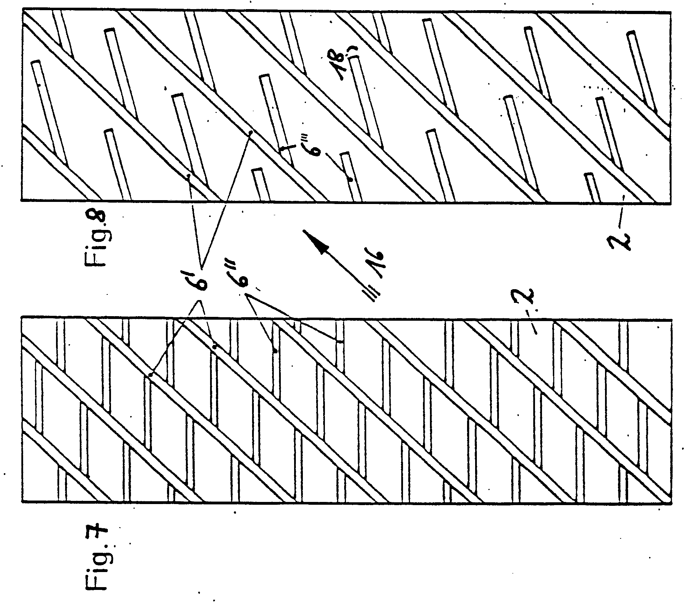

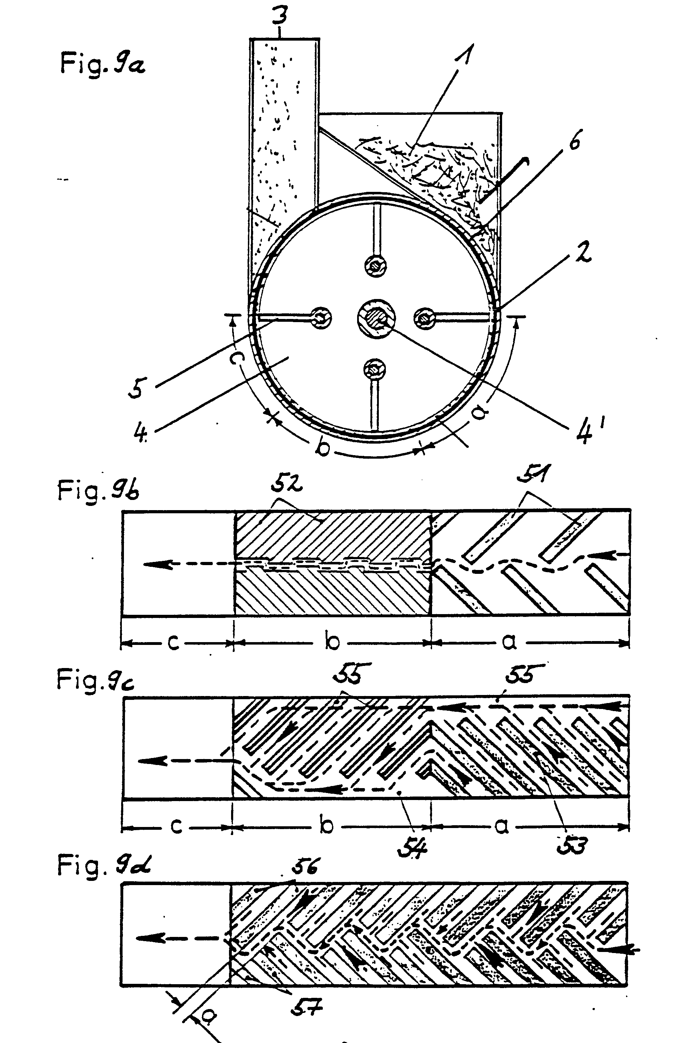

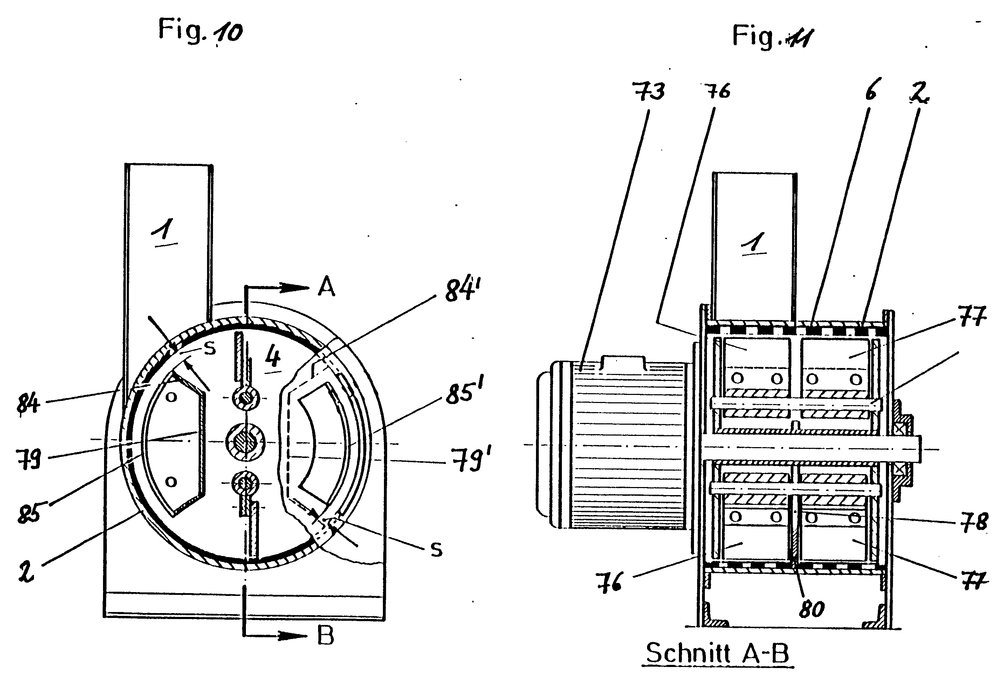

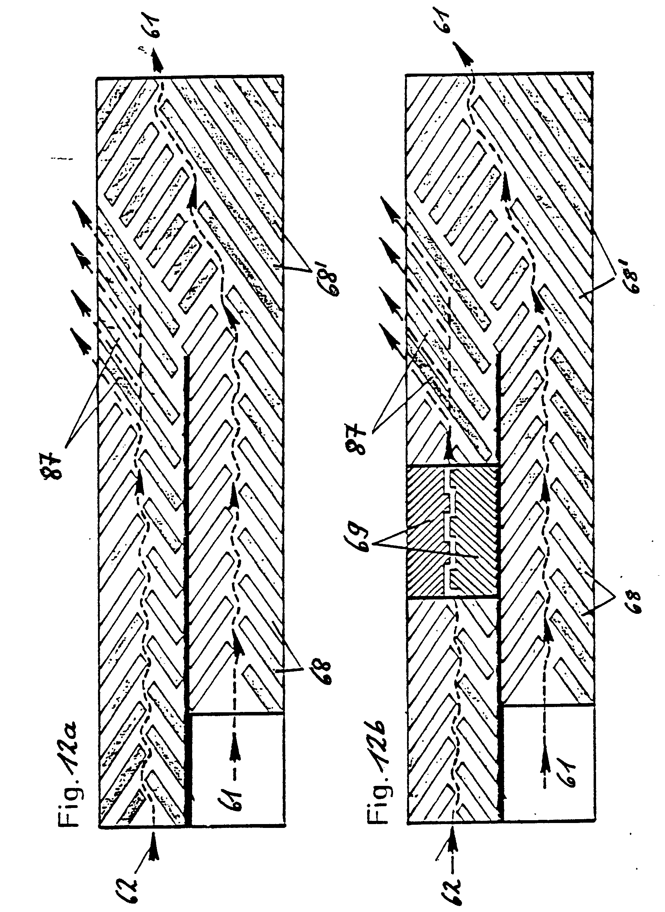

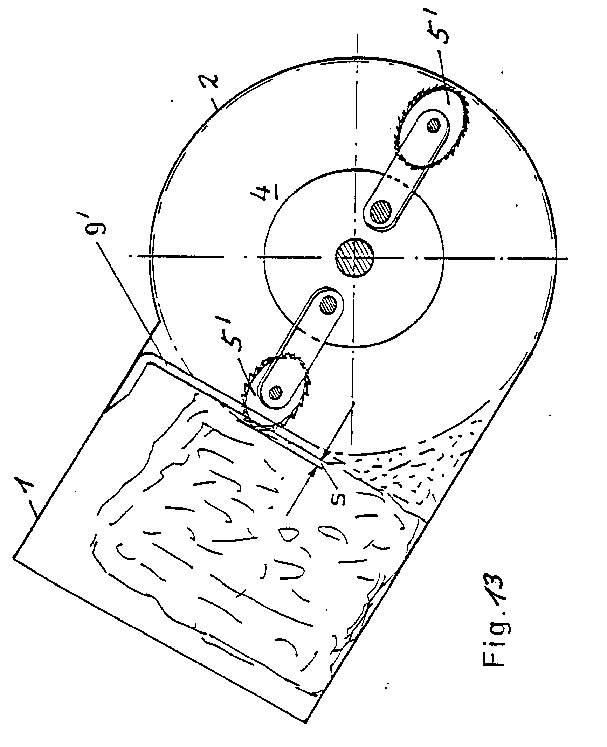

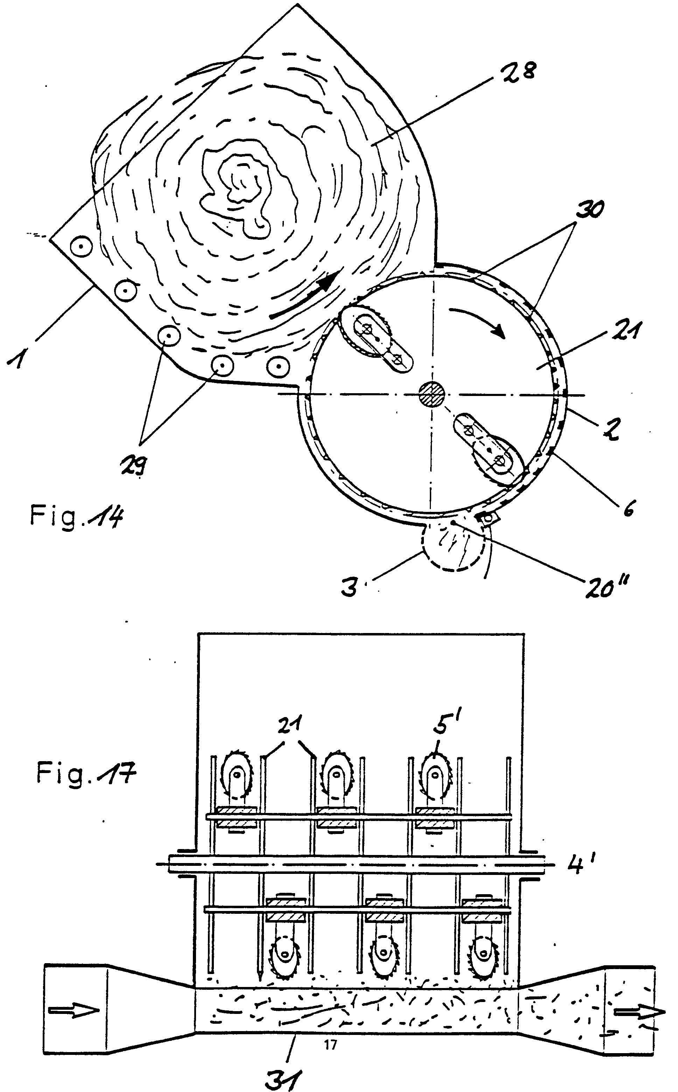

Da die Sägeblätter 5' die Scheiben 21 nur um Zahntiefe s überragen, können die Sägeblätter nur maximal eine Schichtdicke des Halmgutes entsprechend der Zahntiefe abnehmen. Auf Grund der taumelnden Anordnung der Sägeblätter 5' entspricht ihre Arbeitsbreite der Projektion in Drehrichtung des die Scheiben 21 überragenden Bogens des Blattes. Hierdurch und durch die V-förmig versetzt angeordneten Leisten 6 (Fig. 6) wird ein oszillierender Aufbereitungspfad 27 erzwungen, der zu einer gleichmäßigen Zerkleinerung des Halmguts führt.

Wenn der Auswurf des Materials zur Seite hin erfolgen soll, kann eine schraubenförmige Belegung der Innenwand des Gehäuses 2 mit gegeneinander versetzten Leisten vorgesehen werden, die einen axialen Guttransport bewirkt. Das zerkleinerte Gut tritt dann durch eine nicht dargestellte seitliche Öffnung des Gehäuses aus.

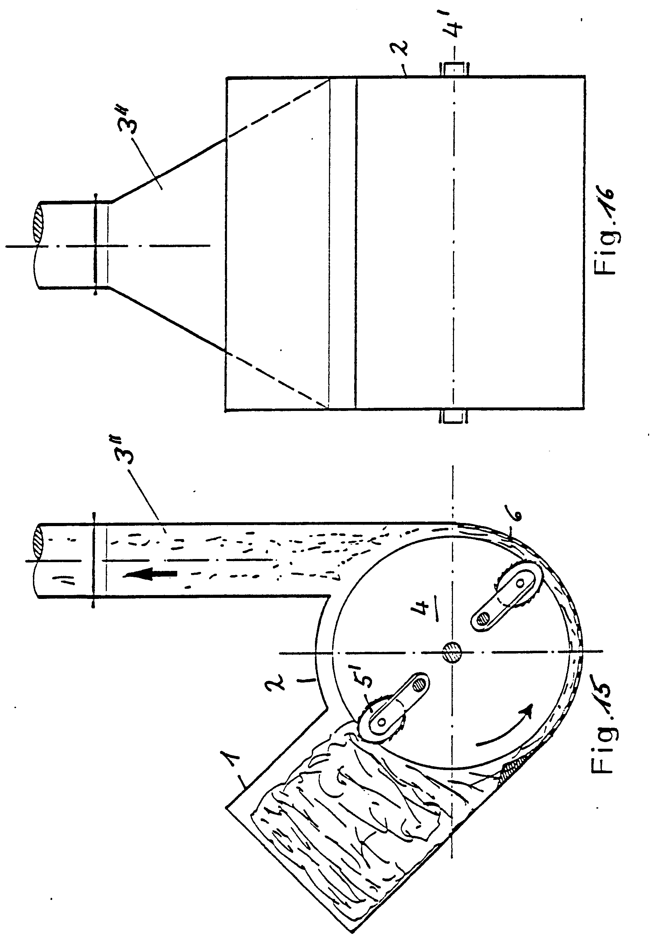

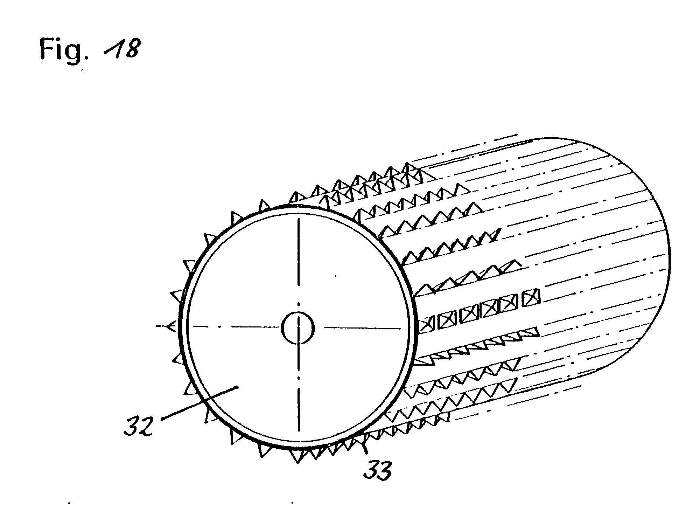

Die Fig. 7 und 8 zeigen eine derartige schraubenförmige Bewegung der (abgewickelt dargestellten) Innenwand des Rotorgehäuses 2 mit Leisten 6', 6" bzw. 6"'. Die Leisten 6' weisen dabei einen schneckenförmigen Verlauf auf, so daß sich durch die Drehung des Rotors eine axiale Komponente der Förderung ergibt.

Fig. 7 zeigt eine Ausführungsform, bei der zusätzlich zu den schraubenförmig verlaufenden Leisten 6' achsparallel Leisten 6" aufgesetzt sind. Bei der in Fig. 8 dargestellten Ausführungsform lassen die Leisten 6"' in der durch einen Pfeil 16 gekennzeichneten Flußrichtung des Guts einen Spalt 18- zur folgenden Leiste 6' frei; zudem sind die Leisten 6"' zur Achsparallelen geneigt, so daß das Material abfließen kann und bei faseriger Beschaffenheit keine Verstopfungen auftreten können.

Unabhängig davon, ob die Leisten einen schrauben- bzw. schneckenförmigen oder einen oszillierenden Aufbereitungspfad bilden, können die Leisten in gleicher Weise wie die Werkzeuge des Rotors als Schneid-, Reiß-, Quetsch- oder Mahlleisten ausgebildet sein. Dabei ist es vorteilhaft, wenn die Werkzeuge zu Beginn des Aufbereitungspfades mehr schneidend oder reißend und zum Ende hin mehr reibend oder mahlend arbeiten, da hierdurch faseriges Gut zunächst zerkleinert und das zerkleinerte Gut anschließend auf die gewünschte Größe gebracht wird.

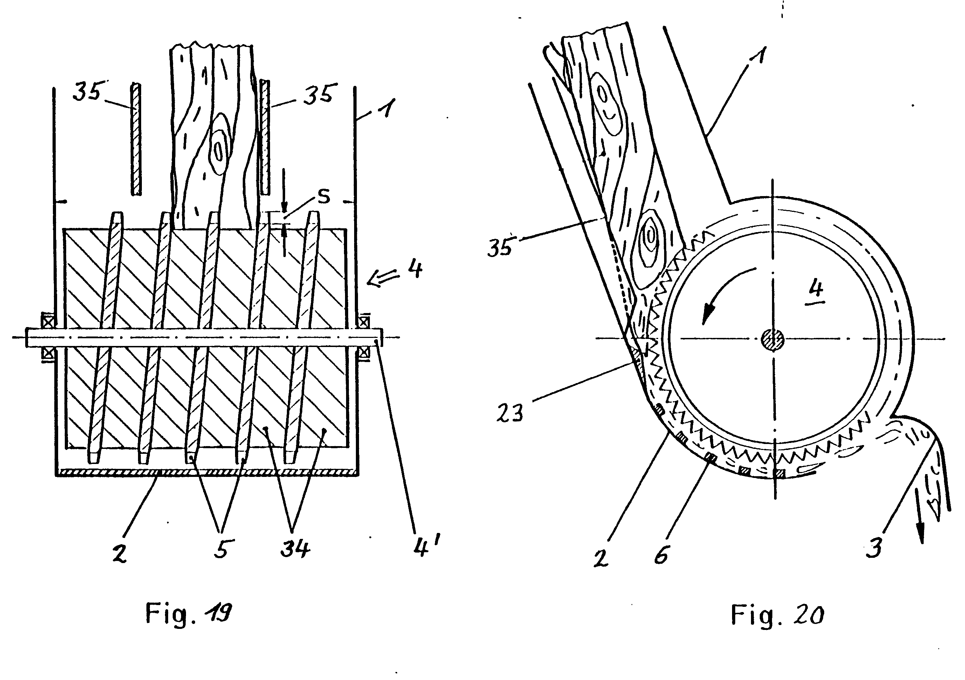

Durch die Belegung der Innenwand des Rotorgehäuses 2 mit Leisten, die eine Führ- und Zerkleinerungsfunktion haben, stehen die verschiedensten Variationsmöglichkeiten offen: das zu zerkleinernde Gut kann nicht nur auf einem Kreissegment-Weg geführt und auf diesem Weg zerkleinert werden, vielmehr kann es auch auf einem schraubenförmigen Weg geführt werden, auf dem es verschiedene Zerkleinerungsstufen durchläuft. Ferner ist es möglich, das zu zerkleinernde Gut auf mehreren kreisförmigen Bahnen zu führen, wobei das Gut nur von einer Bahn zur nächsten übertreten kann, wenn es bestimmte Bedingungen beispielsweise hinsichtlich der Größe erfüllt. Beispiele hierfür werden im folgenden in Verbindung mit den Figuren 9f besprochen.

Figur 9a zeigt schematisch eine Zerkleinerungsvorrichtung, die wiederum als Zufuhrorgan einen Einwurfschacht 1, einen Rotor 4 mit einem Rotorgehäuse 2 sowie als Ausschuborgan einen Auswurf 3 ausweist.

Die Innenwand des Rotorgehäuses 2 ist mit Leisten belegt, die zur Führung des zu zerkleinernden Materials sowie als "Gegenschneide" für die Zerkleinerungswerkzeuge des Rotors 4 dienen. (Bei dem in Figur 9a nur schematisch dargestellten Rotor sind exemplarisch pendelnd aufgehängte Zerkleinerungswerkzeuge 5 angedeutet; natürlich kann als Rotor jede der vorstehend und nachstehend beschriebenen Ausführungen verwendet werden.)

In den Figuren 9b bis 9d sind Beispiele für die Führungsund Schneidleisten 6 auf der Innenwand des Rotorgehäuses 2 dargestellt.

Figur 9b zeigt eine mögliche Belegung der Innenwand des Rotorgehäuses 2. Der Abschnitt ist mit pfeilförmigen Leisten 51 belegt, der Abschnitt b mit pfeilförmig angeordneten Zähnen 52, deren Profiltiefe geringer als die der Leisten 51 ist. Das durch die Öffnung zwischen Einwurfschacht 1 und Rotorgehäuse 2 eintretende Material wird im Bereich a grob und im Bereich b fein zerkleinert. Im Bereich c, der keine Leisten aufweist, wird das Gut von den Werkzeugen 5 des Rotors 4 stark beschleunigt und ausgeworfen. Würde nämlich die Profilierung 52 bis zur Auswurföffnung reichen, wäre die Auswurfgeschwindigkeit in vielen Fällen zu gering.

Figur 9c zeigt ein anderes Muster einer gestuften Profilierung. Die grob geneigten Leisten 53 bringen das Gut in Flußrichtung gesehen nach rechts (d.h. in Figur 9c nach oben), während die feinen Zahnleisten 54 das Gut nach links und anschließend wieder zur Mitte bringen. An den seitlichen Gehäusewänden sind glatte Kanäle 55 vorgesehen, so daß sich ein radialer Fluß des zu zerkleinernden Gutes einstellt. Im Abschnitt c wird das Gut auf Umfangsgeschwindigkeit beschleunigt und ausgeworfen.

Die in Figur 9c gezeigte Leistenanordnung führt zu einer stärker oszillierenden Bewegung des zu zerkleinernden Guts und damit zu einem insgesamt längeren Aufbereitungspfad.

Figur 9d zeigt eine weitere mögliche Leistenanordnung, bei der ebenfalls die Amplitude der Oszillationsbewegung des Guts auf dem mittleren Aufbereitunspfad größer als bei der in Figur 9b dargestellten Leistenanordnung ist. Jeweils zwei Leisten 56 und 57 sind V-förmig überlappend mit einem Abstand a zueinander angeordnet.

In den Figuren 9b bis 9d sind Ausführungsbeispiele dargestellt, bei denen die Profilierung der Leistenanordnung in Flußrichtung stufig abnimmt. Natürlich kann die Profiltiefe auch stetig abnehmen, was insbesondere dann fertigungstechnisch leicht möglich ist, wenn ein Gußgehäuse verwendet wird.

Die Figuren 10 bis 12 zeigen ein Beispiel für eine erfindungsgemäße Zerkleinerungsvorrichtung mit zwei im Mittel kreisförmigen Aufbereitungspfaden, wobei das zu zerkleinernde Gut von einem ersten Pfad 61 auf einen zweiten Pfad 62 durch schräg gestellte Leisten 68' überführt wird (Figur 12a und 12b).

Die Zerkleinerungsvorrichtung besteht wiederum aus einem Einfüllschacht 1, einem Rotorgehäuse 2 mit einem Rotor 4 und einem nicht näher dargestellten Ausschuborgan. Der Rotor 4 wird von einem Motor 73 angetrieben und trägt pendelnd aufgehängte Zerkleinerungswerkzeuge 76 und 77, zwischen denen am Rotor 4 eine mit dem Rotor umlaufende Scheibe 78 befestigt ist. Die Innenwand des Rotorgehäuses 2 weist gegenüber der Scheibe 78 einen Steg 80 auf.

Das insbesondere im Bereich des Einfüllschachts 1 unter der Schlag- und Schneidwirkung der Werkzeuge 76 auch seitlich abprallende Gut wird durch die Trennscheibe 78 und den Steg 80 abgefangen, so daß kein ungenügend zerkleinertes Material in den Bereich der Werkzeuge 77 geworfen wird.

Wie in Figur 10 dargestellt, trägt der Rotor 4 in den Bereichen zwischen den Werkzeugen 76 und 77 geschlossene Körper 79 und 79'. Gemeinsam mit Prallflächen 84 und 84' reflektieren die geschlossenen Körper das von den Werkzeugen 76 und 77 gegen diese geworfene Gut. Weiter reflektieren sie gemeinsam mit den kreisförmigen Segmenten 85 und 85' das von den Leisten 75 beziehungsweise der Profilierung nach innen abprallende Gut. Zwischen den kreisförmigen Segmenten 85 und 85' befindet sich ein Spalt s, durch den nicht zerkleinerungsfähige Fremdkörper ausgetragen Werden können.

Wie die Figuren 12a und 12b im einzelnen zeigen, wird das Gut im Mittel den Pfaden 61 und 62 in Pfeilrichtung folgen. Die Profilierung der einzelnen Leisten ist gestuft ausgeführt, wobei der Belegung mit groben Leisten 68 eine Belegung mit feineren Leisten 68' folgt. Der Belegung mit feinen Leisten 68' schließt sich, damit das Gut durch eine seitliche Öffnung austreten kann, eine nach außen weisende Leistenprofilierung 87 an. Dabei sind die Leisten 68' so gestaltet, daß sie - wie bereits ausgeführt - das Gut vom Pfad 61 in den Pfad 62 überleiten.

Die in Verbindung mit den Fig. 10 bis 12 beschriebene Zerkleinerungsvorrichtung kann beispielsweise zum Zerkleinern von Maiskörner-Spindelgemisch verwendet werden. Durch die in Axialrichtung beabstandeten jeweils in etwa kreisförmigen Aufbereitungspfade 61 und 62 wird erreicht, daß bei der Zerkleinerung von Maiskörner-Spindelgemisch mehr als 80 % des Guts unter 2 mm Partikelgröße liegt. Die Ursache für dieses mit bekannten Zerkleinerungsvorrichtungen nicht oder nur in mehreren Zerkleinerungsvorgängen erzielbare Ergebnis ist der definierte Aufbereitungspfad, der durch die erfindungsgemäße Leistenbelegung erzielt wird. Dabei verhindern die bei der erfindungsgemäßen Vorrichtung vorgesehenen Trennleisten bzw. - scheiben das Übertreten von ungenügend zerkleinertem Gut zwischen zwei Aufbereitungspfaden. Ein weiterer Vorteil der erfindungsgemäß vorgesehenen Leistenbelegung ist, daß der Aufbereitungspfad "gerade so lang" gewählt werden kann, daß das gewünschte Zerkleinerungsergebnis ohne zu großen Zeitaufwand und ohne unnötigen Energieverbrauch erzielt wird.

Die erfindungsgemäß ausgebildeten Zerkleinerungswerkzeuge, d.h. die erfindungsgemäß vorgesehene Kombination der Werkzeuge des Rotors mit den auf der Innenwand des Rotorgehäuses vorgesehenen Leisten, erlauben eine Gestaltung der Zufuhrorgane für das zu zerkleinernde Gut sowie der Ausschuborgane, die dem jeweiligen zu zerkleinernden Material und der gewünschten Materialgröße sowie konstruktiven Gegebenheiten angepaßt ist.

Zur exemplarischen Erläuterung sollen im folgenden verschiedene derartige Ausführungs formen besprochen werden.

Die Fig. 13 bis 17 zeigen Modifikationen des in Verbindung mit den Fig. 3 bis 6 erläuterten zweiten Ausführungsbeispiels.

Fig. 13 zeigt ein Ausführungsbeispiel, bei dem die Stützscheiben durch einen Rechen 9' ersetzt bzw. ergänzt sind, und das ansonsten einen ähnlichen Aufbau wie das bereits beschriebene zweite Ausführungsbeispiel hat.

Bei der in Figur 14 dargestellten Modifikation sind zur Zerkleinerung von Rundballen 28 im Einführschacht 1 Rollen 29 angeordnet. Durch die Schnittkräfte der gezahnten Werkzeuge wird der Rundballen in Drehung versetzt und in Schichten entsprechend der Zahntiefe am Umfang abgefräst. Das Mitnehmen und damit das Drehen des Rundballens 28, der auf den rotierenden Scheiben 21 aufliegt, wird durch Zacken 30 am Umfang der Scheiben 21 verstärkt. Die Drehung des Rundballens bewirkt, daß dieser mit geringerer Gewichtskraft auf den Rollen 29 aufliegt und sich leichter dreht.

Durch die Drehung des Rundballens 28 wird ein gleichmäßigeres Abfräsen und damit ein gleichmäßigeres Zerkleinerungsergebnis als bei ungedrehtem Material erzielt.

Bei der in den Figuren 15 und 16 gezeigten Modifikation ist der Auswurfkanal 3" auf die übliche Gebläserohrweite zusammengezogen. Über eine nicht dargestellte, sich anschließende Rohrleitung kann das zerkleinerte Gut beispielsweise zu einem Silo gefördert werden.

Figur 17 zeigt eine weitere Möglichkeit, das zerkleinerte Gut auszubringen. Das zerkleinerte Gut tritt durch eine Öffnung 20" im Boden des Rotorgehäuses 2 in eine Rohrleitung 31 aus, wobei mit bekannten Mitteln, beispielsweise mittels einer Injektorschleuse das Einsaugen und der Weitertransport des Guts bewirkt wird.

Bei den vorstehend beschriebenen Ausführungsbeispielen sind von Scheiben 21 getrennte kleine taumelnde Sägeblätter 5' verwendet worden. An Stelle von kleinen Sägeblättern 5' können natürlich auch große Sägescheiben wie bei dem in Verbindung mit den Figuren 1 und 2 beschriebenen ersten Ausführungsbeispiel verwendet werden.

Ferner ist es möglich, eine in Figur 18 dargestellte Trommel 32 mit aufgesetzten Zähnen 33 zu verwenden. Die einzelnen Zahnreihen verlaufen dabei wieder "taumelnd", d.h. sie schließen mit der Rotorachse 4' einen Winkeln ≠ 90° ein. Die Trommeloberfläche zwischen den Zähnen 33 stützt dabei in ähnlicher Weise wie die Scheiben 21 bei den vorigen Beispielen das zu zerkleinernde Gut ab.

Die in Figur 18 gezeigte Trommel mit aufgesetzten Zähnen ist insbesondere dann zu bevorzugen, wenn das zu zerkleinernde Gut aus vergleichsweise großen Gehölzen etc. besteht, da die mechanische Festigkeit einer als Trommel ausgeführten Zerspanungseinrichtung größer als die von einzelnen Sägeblättern mit dazwischen angeordneten Stützscheiben ist.

In den Figuren 19 und 20 ist eine weitere Möglichkeit dargestellt, die mechanische Festigkeit der Zerspanungseinrichtung einer erfindungsgemäßen Zerkleinerungsvorrichtung zu erhöhen und damit die erfindungsgemäße Vorrichtung auch zum Zerkleinern von vergleichsweise großen Gehölzen verwendbar zu machen.

Auf dem Rotor 4 sind taumelnd Sägescheiben 5 angeordnet, zwischen denen sich Distanzscheiben 34 befinden, die von den Sägescheiben 5 um Zahntiefe s überragt werden. Ferner ist im Einführschacht 1 eine Zwangsführung 35 vorgesehen, mittels der erreicht wird, daß die Gehölze nur senkrecht eingeworfen werden können.

Der bereits bei den vorher beschriebenen Ausführungsbeispielen verwendete verstellbare Keil 23 kann wiederum zum Einstellen des Feinheitsgrads der Zerspanung und zum Einstellen der Intensität des Einziehens der zu zerkleinernden Stange verwendet werden.

Die in den Figuren 19 und 20 dargestellte Lösung hat gegenüber der in Fig. 18 gezeigten Trommel 32 den Vorteil, daß bei Beschädigung einzelner Zähne nur die jeweiligen Sägescheiben 5, nicht jedoch die ganze Trommel 32 ausgetauscht werden muß.

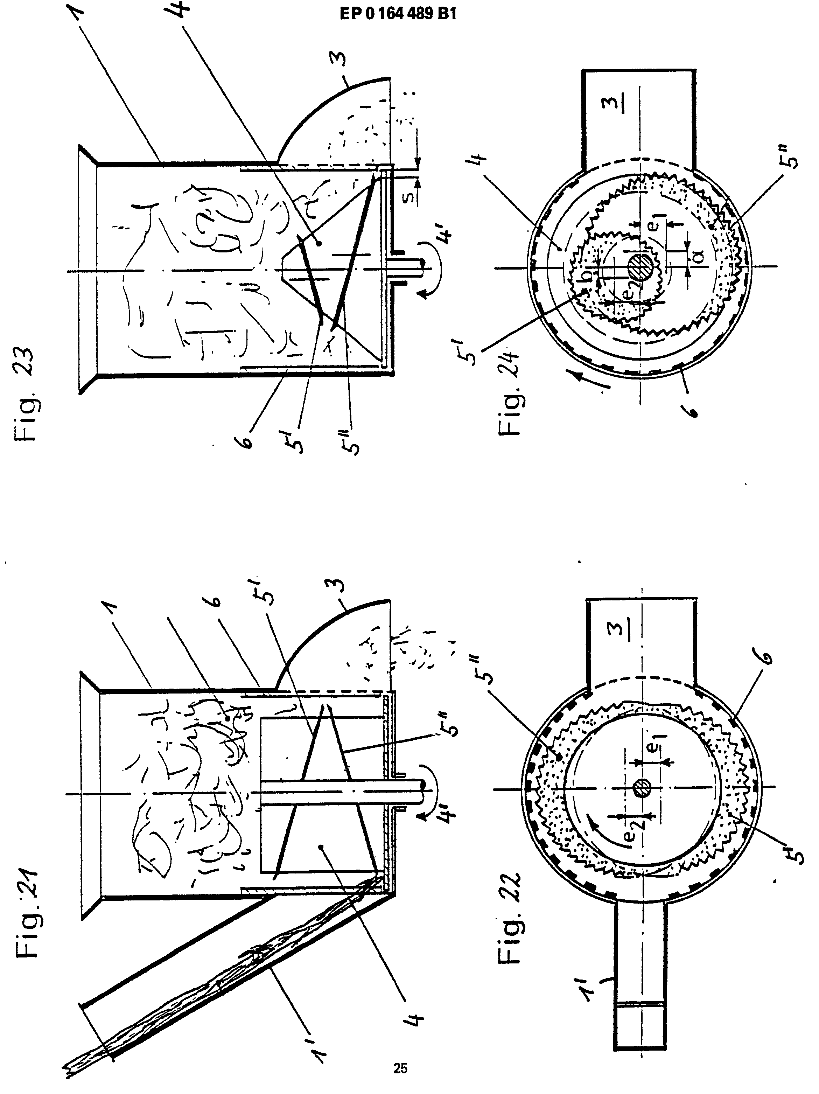

Die Figuren 21 bis 24 zeigen ein weiteres Ausführungsbeispiel für einen erfindungsgemäßen Rotor. Dieser Rotor ist ähnlich aufgebaut wie der in den Figuren 19 und 20 gezeigte. Durch die besondere Anordnung der Sägescheiben wird jedoch ein besonders gleichmäßiger Einzug des Materials erreicht.

Die Fig. 21 und 22 zeigen in einem Querschnitt und in einer Aufsicht, daß der Rotor 4 mit vertikaler Achse 4' zwei Sägescheiben 5' und 5" aufweist, die unterschiedlich zur Achse geneigt und exzentrisch angeordnet sind. Bei einer Drehung im Uhrzeigersinn ist die Scheibe 5' mit der Exzentrizität e1 nach vorne und die Scheibe 5" mit der Exzentrizität e2 nach hinten versetzt. Die Leisten 6 sind so beschaffen, daß sie das Gut dem Rotor gegenüber festhalten. Hierdurch wird das zwischen Gehäusewand 2 und Rotor 4 befindliche Material nach unten einziehend abgefräst.

Das Gehäuse trägt seitlich einen schräg angesetzten Zuführkanal 1' für Gehölze mit einer Dicke bis zu etwa 8 cm. Auch diese Hölzer werden aufgrund der Anstellung der Scheiben selbsttätig eingezogen. (Anstelle der dargestellten Sägescheiben kann der Rotor auch entsprechend angestellte Feinverzahnungen tragen.)

Die Figuren 23 und 24 zeigen eine Modifikation der in den Figuren 21 und 22 dargestellten Ausführung mit kegeligem Grundkörper 4 und ansonsten gleichem Aufbau und insbesondere Anordnung der Sägescheiben 5' und 5". Diese Ausführung ist insbesondere für dicke Gehölze etc. geeignet. Der Kragen s verhindert dabei ein Aufstützen des Guts auf dem Gehäuseboden.

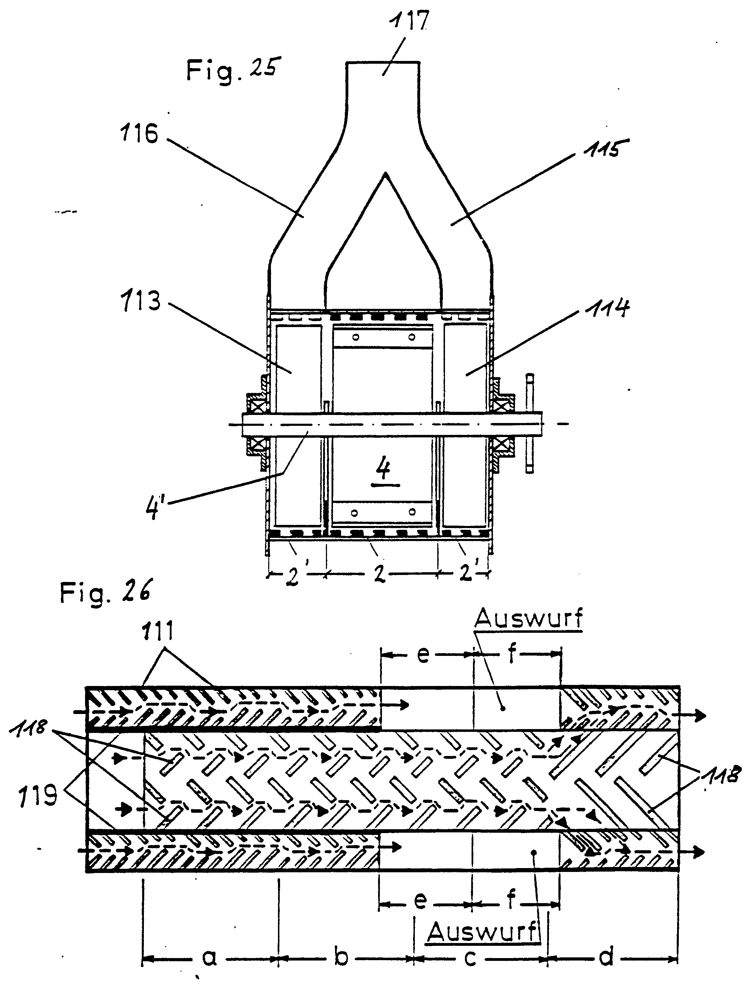

Fig. 25 zeigt ein Ausführungsbeispiel mit breiter Schneidtrommel 4, die Werkzeuge entsprechend einem der vorstehend erläuterten Ausführungsbeispiele tragen kann. Beidseits der Trommel 4 sind auf gleicher Achse 4' Aufbereitungsrotoren 113 und 114 in den Gehäuseabschnitten 2' angeordnet, die auch das zerkleinerte Gut auswerfen.

Figur 26 zeigt die zugehörige Leistenbelegung. Das mittig zugeführte zu zerkleinernde Gut wird zunächst auf einem Aufbereitungspfad von den auf dem Rotor 4 angeordneten Werkzeugen zerkleinert, der nahezu kreisförmig verläuft. In der Sektion d wird das Gut durch geneigt liegende Leisten 118 zur Seite auf den Mantel 2' überführt. Die Leisten 111 sind feiner gehalten und weisen eine geringere Tiefe auf, so daß das Gut fein zerkleinert wird. Statt der beschriebenen gestuften Zerkleinerung läßt sich auch eine stetig zunehmende Feinzerkleinerung dadurch vornehmen, daß die Leistenbelegung, bzw. die Profilierungen auf den Mantelbereichen 2, 2' mit zunehmender Pfadlänge stetig feiner und auch die Profiltiefe stetig geringer wird. Im Schnittbereich und den Abschnitten a und b ist die grobe Leistenprofilierung 118 von der daneben liegenden feinen Leistenprofilierung 111 durch das Leistensegment 119 getrennt. Auf diese Weise wird verhindert, daß zerkleinertes Gut vom Mantelbereich 2 in den Mantelbereich 2' seitlich überspringt. Damit das Gut eine genügende Abwurfgeschwindigkeit erhält, bleibt der Bereich e vor der Auswurföffnung f von der Leistenbelegung frei. Auf der glatten Mantelfläche des Bereichs e wird das Material in den Auswurfstutzen 115 bzw. 116 abgeschleudert. Die beidseitigen Auswurfstutzen 115, 116 vereinigen sich zum Auswurfrohr 117.

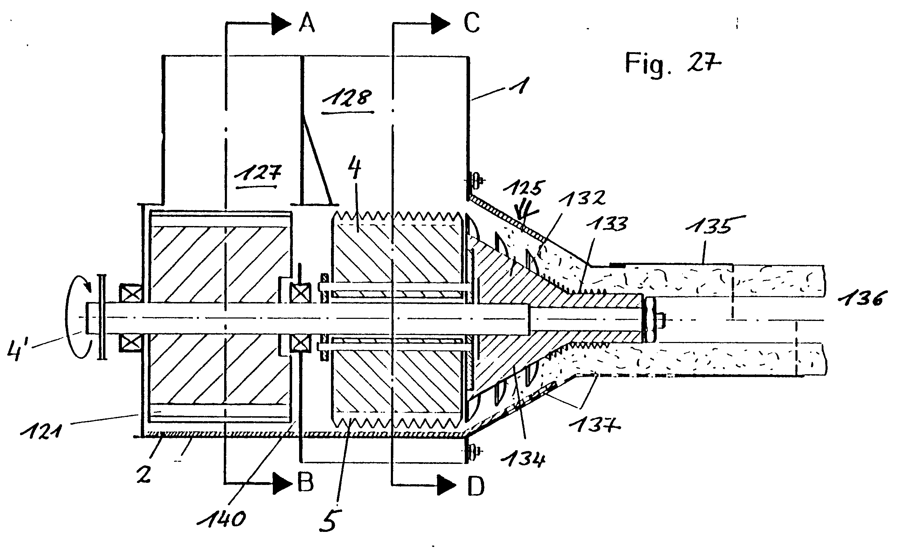

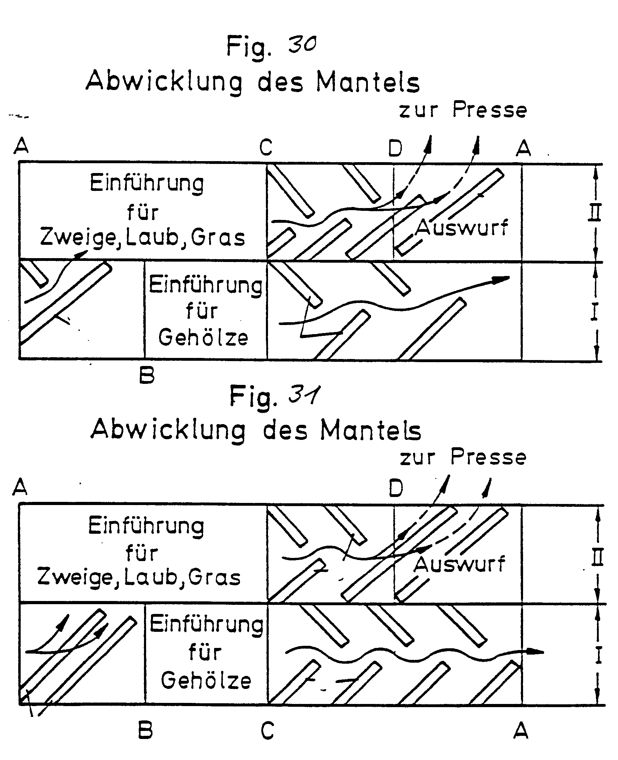

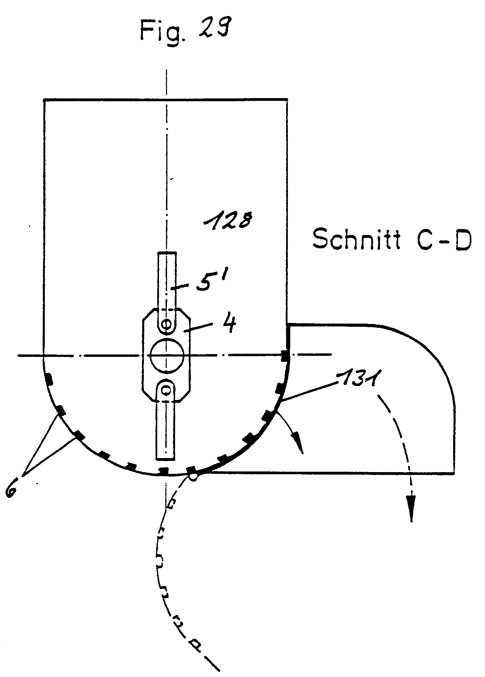

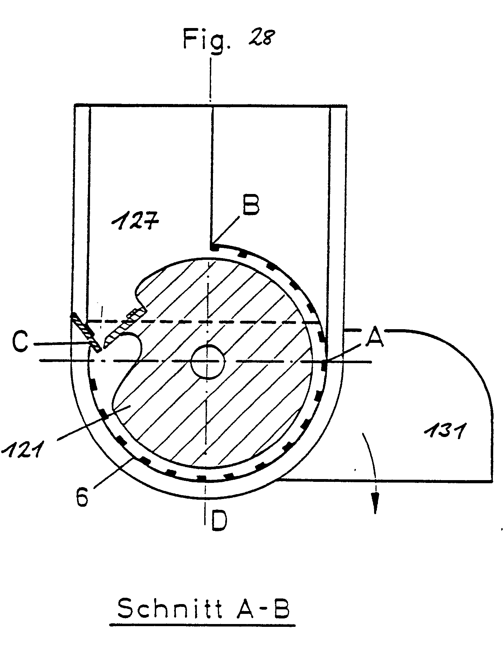

Die Figuren 27 folgende zeigen eine kombinierte Zerkleinerungs- und Preßeinrichtung für Gehölze und pflanzliche Stoffe. Dabei zeigen Fig. 27 einen Längsschnitt und die Figuren 28 und 29 Schnitte bei den Linien A - B bzw. C - D in Fig. 27. Die Figuren 30 und 31 zeigen die zugehörige Leistenbelegung.

Die Welle 4' trägt eine Messertrommel 121, den Rotor 4 mit pendelnd aufgehängten Schneid- und Reißwerkzeugen, die nur schematisch dargestellt sind und beispielsweise den beim zweiten Ausführungsbeispiel verwendeten Werkzeugen 5' entsprechen können, und eine Schneckenpresse 125. Der Mantel 2 umgibt diese Organe.

Gehölze werden der Messertrommel durch den Kanal 127, feineres Gut dem Rotor 4 durch den Kanal 128 zugeführt. Die Innenseite des Mantels ist wiederum mit Leisten 6 und 6' belegt. Die pfeilförmige Anordnung der Leisten bewirkt im Zusammenwirken mit den rotierenden Werkzeugen einen axialen Guttransport. Die pfeilförmige Leistenanordnung nach Fig. 30 bleibt im Bereich I des Sektors C - A wandparallel; im Sektor A - B führen die Leisten 6 das Material axial in den Bereich des Rotors 4.

Die eingeführten Zweige, Laub oder Gras werden an der Eintrittskante C zerschlagen und im Sektor C - D, der mit Leisten belegt ist, nachzerkleinert. Eine weitere Nachzerkleinerung erfährt in diesem Sektor auch das aus dem Bereich I eingetretene Gut. Bei geöffneter Auswurfklappe 131 wird das nachzerkleinerte Material im Sektor D - A des Bereichs 131 wieder ausgeworfen und bei geschlossener Klappe der Presse 125 zugeführt. Der mit Schneckengängen 132 und einer Gewindeprofilierung 133 versehene rotierende Preßkörper 134 fördert das Gut in den Preßkanal 135. Feines und genügend trockenes Material wird zu haltbaren Briketts verdichtet, grünes Gras abgepreßt, wobei der Saft durch Lochungen 137 austreten kann.

Durch die Reibungswärme der Schnecke findet eine Nachtrocknung statt, so daß bei hoher Schneckendrehzahl ein trockenes Brikett austritt. Der Dampf entweicht durch die im Brikettstrang hinterlassene Röhre 136 und durch die Lochungen 137.

Für kleinere Schneckendrehzahlen werden die Messertrommel und der Rotor über eine Hohlwelle und die Schnecke durch eine durch diese führende Vollwelle angetrieben.

Diese Anordnung hat den zusätzlichen Vorteil, daß zwischen der zweiten Zerkleinerungseinrichtung und der Schneckenpresse ein Steg 140 eingezogen werden kann. Damit wird eine aufwendige fliegende Lagerung der Schneckenpresse vermieden.

Vorstehend ist die Erfindung exemplarisch beschrieben worden. Selbstverständlich sind innerhalb des allgemeinen Erfindungsgedankens die verschiedensten Modifikationen möglich. So ist es natürlich immer möglich, Lochsiebe etc. an geeigneten Stellen einzubauen. Ferner können die verschiedenen beschriebenen Gedanken nahezu beliebig kombiniert werden und so dem jeweiligen Einsatzfall angepaßt werden. Vor allem ist es immer möglich, Zerkleinerungsvorrichtungen für gröberes und feineres Gut zu kombinieren, eine Vorverkleinerung einzuführen etc.

**Patentansprüche**

1. Vorrichtung zum Zerkleinern von körnigem, stückigem und/oder faserigem Gut, mit wenigstens einem Zufuhrorgan (1), das das zu zerkleinernde Gut einem in einem Gehäuse angeordneten Rotor (4; 32) zuführt, der Zerkleinerungswerkzeuge (5) trägt, die als schräg zur Rotorachse (4') angeordnete zahnförmige oder mit Schneidleisten versehene Werkzeuge ausgebildet sind, und mit auf der Innenseite des Rotorgehäuses (2) vorgesehenen Leisten zusammenwirken, sowie mit wenigstens einem Ausschuborgan, dadurch gekennzeichnet, daß die Leisten (6; 51,52; 53; 57; 68; 87; 111, 118) derart angeordnet sind, daß sich Aufbereitungspfade ergeben, auf denen das Gut durch die Schrägstellung der Zerkleinerungswerkzeuge vom Zufuhrorgan (1) zum Ausschuborgan (3, 8; 31, 115 - 117; 125) unter fortlaufender Zerkleinerung durch die Werkzeuge in Verbindung mit den Leisten gefördert wird.

2. Vorrichtung nach Anspruch 1, dadurch gekennzeichnet, daß die Leisten auf der Innenseite des Rotorgehäuses (2) V-förmig angeordnet sind, und einen oszillierenden Aufbereitungspfad (27; 55; 61, 62) bilden.

3. Vorrichtung nach Anspruch 1 oder 2, dadurch gekennzeichnet, daß mehrere nahezu kreisförmige Aufbereitungspfade parallel zueinander verlaufen, und daß an dem Rotor und/oder an der Innenseite des Rotorgehäuses (2) angebrachte Trennleisten (6'''; 119) einen Axialvorschub zum Übertritt des Guts von einem Aufbereitungspfad zum nächsten lediglich an bestimmten Stellen (18) und/oder an bei einem bestimmten Aufbereitungszustand gestatten.

4. Vorrichtung nach Anspruch 1 oder 2, dadurch gekennzeichnet, daß die Aufbereitungspfade die Form einer mehrgängigen Schraube haben.

5. Vorrichtung nach einem der Ansprüche 1 bis 4, dadurch gekennzeichnet, daß die Aufbereitungspfade von dem an einer Seite des Rotors angeordneten Zufuhrorgan zu dem an der anderen Seite des Rotors angeordneten Ausschuborgan verlaufen.

6. Vorrichtung nach einem der Ansprüche 1 bis 4, dadurch gekennzeichnet, daß die Aufbereitungspfade von dem in der Mitte des Rotors angeordneten Zufuhrorgan zu den an den beiden Seiten angeordneten Ausschuborganen verlaufen (Fig. 25).

7. Vorrichtung nach einem der Ansprüche 1 bis 6, dadurch gekennzeichnet, daß in der Wand des Rotorgehäuses ein Loch- oder Streifensieb (7) angeordnet ist.

8. Vorrichtung nach einem der Ansprüche 1 bis 7, dadurch gekennzeichnet, daß vor dem Ausschuborgan ein Loch- oder Streifensieb angeordnet ist.

9. Vorrichtung nach einem der Ansprüche 1 bis 8, dadurch gekennzeichnet, daß die Zerkleinerungswerkzeuge Sägescheiben (5) sind, die mit der Drehachse (4') des Rotors (4) einen Winkel $\neq$ 90° einschließen.

10. Vorrichtung nach einem der Ansprüche 1 bis 8, dadurch gekennzeichnet, daß die Zerkleinerungswerkzeuge Sägeblätter sind, die drehbar am Rotor (4) befestigt sind, und deren von der Drehachse (4') des Rotors beabstandete Drehachse windschief zu dieser ist.

11. Vorrichtung nach Anspruch 10, dadurch gekennzeichnet, daß die Zerkleinerungswerkzeuge (5') pendelnd am Rotor (4) befestigt sind.

12. Vorrichtung nach Anspruch 1, dadurch gekennzeichnet, daß die Zerkleinerungswerkzeuge Sägescheiben (5', 5'') sind, die mit unterschiedlicher Exzentrizität (e1, e2) und unterschiedlicher Neigung gegen die Rotorachse (4') am Rotor (4) befestigt sind.

13. Vorrichtung nach Anspruch 1, dadurch gekennzeichnet, daß die Zerkleinerungswerkzeuge aus einer Mehrzahl von in sich geschlossenen Zahnreihen bestehen, die auf einem trommel- oder kegelstumpfförmigen Rotor aufgesetzt sind und deren Ebenen mit der Achse des Rotors Winkeln $\neq$ 90° einschließen.

14. Vorrichtung nach Anspruch 1, dadurch gekennzeichnet, daß die Zerkleinerungswerkzeuge aus Zähnen (33) bestehen, die schraubenförmig auf einem trommel- oder kegelstumpfförmigen Rotor (32) angeordnet sind.

15. Vorrichtung nach einem der Ansprüche 1 bis 14, dadurch gekennzeichnet, daß zwischen den Sägeblättern oder Sägescheiben (5') Stützscheiben (21) angeordnet sind, und daß die Sägeblätter oder Sägescheiben die Stützscheiben um Zahntiefe (s) überragen.

16. Vorrichtung nach einem der Ansprüche 1 bis 15, dadurch gekennzeichnet, daß zwischen den Sägescheiben (5) Distanzscheiben (34) angeordnet sind, die den Raum zwischen den Sägescheiben vollständig ausfüllen und die eine zylinderförmige oder kegelstumpfförmige Außenkontur haben, und daß die Sägescheiben (5) die Distanzscheiben (34) etwa um Zahntiefe (s) überragen.

17. Vorrichtung nach einem der Ansprüche 1 bis 16, dadurch gekennzeichnet, daß die Leisten als glatte oder gezahnte Schneidleisten, gezahnte Reißleisten, stumpfkantige Quetschleisten oder geriffelte Mahlleisten ausgebildet oder eine Kombination hiervon sind.

18. Vorrichtung nach Anspruch 17,
dadurch <u>gekennzeichnet</u>, daß die Leisten zu Beginn eines Aufbereitungspfades als glatte oder gezahnte Schneidleisten (51) und zum Ende hin als geriffelte Mahlleisten (52) ausgebildet sind (Fig. 9b).

19. Vorrichtung nach einem der Ansprüche 1 bis 18,
dadurch <u>gekennzeichnet</u>, daß die Profiltiefe der Leisten in Flußrichtung des zu zerkleinernden Guts in Stufen oder stetig abnimmt.

20. Vorrichtung nach einem der Ansprüche 1 bis 19,
dadurch <u>gekennzeichnet</u>, daß jeweils zwei Leisten (56, 57) V-förmig sich in Drehrichtung überlappen und einen Abstand (a) voneinander haben (Fig. 9d).

21. Vorrichtung nach einem der Ansprüche 1 bis 20,
dadurch <u>gekennzeichnet</u>, daß im Bereich des Ausschuborgans keine Leisten vorgesehen sind (Fig. 9b - 9d).

22. Vorrichtung nach einem der Ansprüche 1 bis 21,
dadurch <u>gekennzeichnet</u>, daß zur Zerkleinerung von gröberen Gehölzen und feiner strukturierten Pflanzenabfällen zwei getrennte Zerkleinerungsstufen vorgesehen sind, und daß zwei auf einer Welle angeordnete und mit Zerkleinerungs werkzeugen versehene Rotoren die Zerkleinerungsstufen bilden.

23. Vorrichtung nach Anspruch 22,
dadurch <u>gekennzeichne</u>, daß auf der Innenwand des Rotorgehäuses der ersten Zerkleinerungsstufe Leisten angeordnet sind, die einen schrauben- oder schneckenförmigen Aufbereitungspfad bilden, der das zerkleinerte Gut aus der ersten Zerkleinerungsstufe in die zweite Zerkleinerungs stufe überführt (Fig. 27).

24. Vorrichtung nach einem der Ansprüche 1 bis 23,
dadurch <u>gekennzeichne</u>, daß das Ausschuborgan ein Wurfgebläse (3; 31; 117) ist.

25. Vorrichtung nach einem der Ansprüche 1 bis 23,
dadurch <u>gekennzeichne</u>, daß das Ausschuborgan eine Förderschnecke (8) ist.

26. Vorrichtung nach einem der Ansprüche 1 bis 23,
dadurch <u>gekennzeichne</u>, daß das Ausschuborgan und der Rotor koaxial angeordnet sind (Fig. 25, 27).

## Claims

1. Device for grinding granular, lumpy and/our fibrous material,
comprising at least one feeding element (1) which supplies the material to he crushed to a rotor (4; 32) disposed in a housing, said rotor carrying crushing tools (5) in the form of tooth-shaped tools or tools provided with cutting edges, both arranged at an inclination relative to the rotor axis (4') and cooperating with edges disposed on the inside of said rotor housing (2), as well as comprising at least one discharge element,
<u>characterized</u> in that said edges (6; 51, 52; 53; 57; 68, 87; 111, 118) are so disposed that they constitute treatment paths along which the material is conveyed, due to the inclination of said crushing tools, from said feeding element (1) to said discharge element (3, 8; 31, 115 - 117; 125) while being crushed by the tools cooperating with said edges.

2. Device according to Claim 1,
<u>characterized</u> in that said edges on the inside of said rotor housing (2) are disposed in V-arrangement and constitute an oscillating treatment path (27; 55; 61, 62).

3. Device according to Claim 1 or 2,
<u>characterized</u> in that several almost circular treatment paths extend in parallel to each other, and that separating edges (6'''; 119) disposed at said rotor and/or the inside of said rotor housing (2) permit a transfer of the material from one treatment path to the next merely at defined locations (18) and/or in a certain condition of treatment.

4. Device according to Claim 1 or 2,
<u>characterized</u> in that said treatment paths present the shape of a multiple-thread screw.

5. Device according to any of Claims 1 through 4,
<u>characterized</u> in that said treatment paths extend from the said feeding element disposed at one side of said rotor, to the said discharge element disposed at the other rotor side.

6. Device according to any of Claims 1 through 4,
<u>characterized</u> in that said treatment paths extend from the feeding element disposed at the center of said rotor, to said discharge elements arranged at both sides thereof (Fig. 25).

7. Device according to any of Claims 1 through 6,
<u>characterized</u> in that a perforated or stripe-type screen (7) is disposed in the wall of the rotor housing.

8. Device according to any of Claims 1 through 7,
<u>characterized</u> in that a perforated or stripe-type screen is disposed ahead of said discharge element.

9. Device according to any of Claims 1 through 8,
<u>characterized</u> in that said crushing tools are sawing plates (5) which cooperate with the axis of rotation (4') of said rotor (4) so as to form an angle ≠ 90°.

10. Device according to any of Claims 1 through 8,
<u>characterized</u> in that said crushing tools are saw blades attached for rotation at said rotor (4) while their own axis of rotation, which is spaced from the axis of rotation (4') of said rotor, is skewed relative to the latter.

11. Device according to Claim 10,

characterized in that said crushing tools (5') are arranged at said rotor (4) so as to oscillate.

12. Device according to Claim 1,

characterized in that said crushing tools are sawing plates (5, 5") which are attached at said rotor (4) at different excentricities (e1, e2) and at different inclinations relative to the rotor axis (4').

13. Device according to Claim 1,

characterized in that said crushing tools consist of a plurality of closed tooth rows attached on a drum-shaped or frustum-shaped rotor while their planes cooperate with the axis of said rotor so as to form an angle ≠ 90°.

14. Device according to Claim 1,

characterized in that said crushing tools consist of teeth which are helically disposed on a drum- or frustum-shaped rotor (32).

15. Device according to any of Claims 1 through 14,

characterized in that supporting disks (21) are arranged between the saw blades or sawing plates (5'), and that said saw blades or sawing plates project above said supporting disks by the depth (s) of a tooth.

16. Device according to any of Claims 1 through 15,

characterized in said spacer disks (34) are disposed between the sawing plates (5), which fill the space between the sawing plates almost completely and which present a cylindrical or frustum-shaped outside contour, and that said sawing plates (5) project above said spacer disks (34) approximately by the depth (s) of a tooth.

17. Device according to any of Claims 1 through 16,

characterized in that the edges are provided as smooth or toothed cutting edges, toothed tearing edges, blunt-edges squeezing edges or serrated grinding edges, or in the form of any combination hereof.

18. Device according to Claim 17,

characterized in that the edges at the beginning of a treatment path are provided in the form of smooth or toothed cutting edges (51) while towards the end of said path they present the form of serrated grinding edges (52).

19. Device according to any of Claims 1 through 18,

characterized in that the profile depth of said edges decreases, either in steps or continuously, in the direction of flow of the material to be crushed.

20. Device according to any of Claims 1 through 19,

characterized in that two edges (56, 57) respectively overlap each other in V-shape in the direction of rotation, while they are spaced by a distance (a) (Fig. 9d).

21. Device according to any of Claims 1 through 20,

characterized in that no edges are provided in the zone of the discharge element (Figs. 9b - 9d).

22. Device according to any of Claims 1 through 21,

characterized in that two separate crushing stages are provided to crush rather coarse wood and plant scrap of a finer structure, and that two rotors constitute said crushing stages, which are disposed on one shaft and are provided each with crushing tools.

23. Device according to Claim 22,

characterized in that edges are provided on the inside of said rotor casing of said first crushing stage, which constitute a helical or spiral treatment path which passes the crushed material from said first crushing stage into said second crushing stage (Fig. 27).

24. Device according to any of Claims 1 through 23,

characterized in that said discharge element is a scoop blower (3; 31; 117).

25. Device according to any of Claims 1 through 23,

characterized in that said discharge element is a worm conveyor (8).

26. Device according to any of Claims 1 through 23,

characterized in that said discharge element and said rotor are arranged in coaxial relationship (Fig. 25, 27).


**Revendications**

1. Dispositif pour le broyage de matériau granuleux, en morceaux, et/ou fibreux,

comprenant au moins un organe d'alimentation (1) qui alimente, en matériau à broyer, un rotor (4; 32) disposé dans un carter, ledit rotor portant des outils broyeurs (5) sous forme d'outils dentiformes ou pourvus des arêtes tronçonneuses ainsi que disposés en biais relativement à l'axe du rotor (4') et coopérant avec des arêtes pourvues sur la face intérieure dudit carter (2) du rotor, et comprenant au moins un élément d'évacuation,

caractérisé en ce que les arêtes(16; 51, 52; 53; 57; 68, 87; 111, 118) sont si disposées qu'elles créent des voies de traitement le long desquelles le matériau est entraîné dudit organe d'alimentation (1) vers ledit élément d'évacuation (3, 8; 31, 115 - 117; 125) grâce à la position en biais desdits outils broyeurs, en étant broyé en continu par les outils coopérants avec lesdites arêtes.

2. Dispositif selon la Revendication 1,

caractérisé en ce que lesdites arêtes sont disposées en V sur la face intérieure du carter (2) du rotor et qu'elles constituent une voie de traitement oscillante (27; 55; 61, 62).

3. Dispositif selon la Revendication 1 ou 2,

caractérisé en ce que plusieurs voies de traitement à peu près circulaires s'étendent en parallèle l'une à l'autre, et en ce que des arêtes tronçonneuses (6'''; 119) disposées au rotor et/ou à la face intérieure du carter (2) du rotor permettent un avancement axial du matériau afin de le passer d'une voie de traitement à l'autre seulement aux endroits définis (18) et/ou dans un état de traitement déterminé.

4. Dispositif selon la Revendication 1 ou 2, caractérisé en ce que lesdites voies de traitement présentent la forme d'une vis aux pas multiples.

5. Dispositif selon quelconque des Revendications 1 à 4, caractérisé en ce que lesdites voies de traitement s'étendent d'un organe d'alimentation disposé d'un côté du rotor vers l'organe d'évacuation disposé de l'autre côté dudit rotor.

6. Dispositif selon quelconque des Revendications 1 à 4, caractérisé en ce que lesdites voies de traitement s'étendent d'un organe d'alimentation disposé au centre du rotor vers des organes d'évacuation disposés des deux côtés (Fig. 25).

7. Dispositif selon quelconque des Revendications 1 à 6, caractérisé en ce qu'un tamis en tôle perforée ou à bandes (7) est pourvu dans la paroi du carter dudit rotor.

8. Dispositif selon quelconque des Revendications 1 à 7, caractérisé en ce qu'un tamis en tôle perforée ou à bandes est pourvu en amont dudit organe d'évacuation.

9. Dispositif selon quelconque des Revendications 1 à 8, caractérisé en ce que les outils broyeurs sont des disques de sciage (5) qui enferment un angle $\neq$ 90° avec l'axe de rotation (4') dudit rotor (4).

10. Dispositif selon quelconque des Revendications 1 à 8, caractérisé en ce que lesdits outils broyeurs sont des lames de scie qui sont fixées audit rotor (4) pour une rotation autour le rotor, pendant que leur axe de rotation écarté de l'axe de rotation (4') du rotor est gauchi relativement au dernier.

11. Dispositif selon la Revendication 10, caractérisé en ce que lesdits outils broyeurs (5') sont fixés en flottant au rotor (4).

12. Dispositif selon la Revendication 1, caractérisé en ce que lesdits outils broyeurs sont des disques de sciage (5', 5") qui sont fixés au rotor (4) à une excentricité différente (e1, e2) et à une inclinaison différente relative à l'axe de rotor (4').

13. Dispositif selon la Revendication 1, caractérisé en ce que lesdits outils broyeurs consistent en une pluralité des rangées des dents fermées qui sont fixées sur un rotor sous forme d'un tambour ou un tronc de cône et dont les plans enferment un angle $\neq$ 90° avec l'axe du rotor.

14. Dispositif selon la Revendication 1, caractérisé en ce que lesdits outils broyeurs sont constitués par des dents (33) disposées en hélice sur un rotor (32) sous forme d'un tambour ou un tronc de cône.

15. Dispositif selon quelconque des Revendications 1 à 14,

caractérisé en ce que des disques d'appui (21) sont pourvues entre les lames de scie ou des disques de sciage (5'), et en ce que lesdites lames de scie ou disques de sciage surmontent lesdites disques d'appui par l'hauteur d'une dent (s).

16. Dispositif selon quelconque des Revendications 1 à 15, caractérisé en ce que des disques d'espacement (34) sont disposées entre les lames de scie (5) et remplissent l'espace entre les disques de sciage complètement pendant qu'elles présentent un contour extérieur cylindrique ou tronconique, et en ce que lesdites disques de sciage (5) surmontent lesdites disques d'espacement (34) par à peu près l'hauteur d'une dent (s).

17. Dispositif selon quelconque des Revendications 1 à 16, caractérisé en ce que lesdites arêtes sont des arêtes tronçonneuses lisses ou dentées, des arêtes arracheuses dentées, des arêtes aplatisseuses à bords émoussés, ou des arêtes pulvérisatrices crantées, ou en combinées.

18. Dispositif selon la Revendication 17, caractérisé en ce qu'à l'entrée dans une voie de traitement, lesdites arêtes sont des arêtes tronçonnantes lisses ou dentées (51), et des arêtes pulvérisatrices crantées (52) vers la sortie (Fig. 9b).

19. Dispositif selon quelconque des Revendications 1 à 18, caractérisé en ce que l'hauteur du profilage des arêtes se diminue en sens du courant du matériau à broyer, soit en étages ou en continu.

20. Dispositif selon quelconque des Revendications 1 à 19, caractérisé en ce que deux arêtes (56, 57) respectivement s'imbriquent en V en sens de rotation et sont écartées l'une de l'autre par un écart (a) (Fig. 9d).

21. Dispositif selon quelconque des Revendications 1 à 20, caractérisé en ce que des arêtes ne sont pas pourvues dans la zone dudit élément d'évacuation (Fig. 9b - 9d).

22. Dispositif selon quelconque des Revendications 1 à 21, caractérisé en ce que deux étages séparés de broyage sont pourvus pour broyer des matériaux en bois ou des rondins plus gros et des déchets végétales d'une structure plus fine, et en ce que deux rotors constituent ces étages de broyage, qui sont disposés sur un arbre et portent des outils broyeurs.

23. Dispositif selon la Revendication 22, caractérisé en ce que des arêtes sont disposées sur la paroi intérieure du carter du rotor du premier étage de broyage, qui forment une voie de traitement en hélice ou à vis afin de transférer le matériau broyé du premier étage de broyage dans le deuxième étage de broyage (Fig. 27).

24. Dispositif selon quelconque des Revendications 1 à 23, caractérisé en ce que ledit élément d'évacuation est une souffleuse à éjection (3; 31; 117).

25. Dispositif selon quelconque des Revendications 1 à 23,
caractérisé en ce que ledit élément d'évacuation est une hélice transporteuse (8).

26. Dispositif selon quelconque des Revendications 1 à 23,
caractérisé en ce que ledit élément d'évacuation et ledit rotor sont disposés coaxialement (Fig. 25, 27).

Fig. 2

Fig. 1

Fig. 4

Schnitt A–B

Fig. 3

Fig. 6

Fig. 5

Fig.8

Fig.7

Fig. 9a

3

1

6

2

5

4

c

b

α

4'

Fig. 9b

52

51

c

b

a

Fig. 9c

55

55

c

b

54

a

53

Fig. 9d

56

a

57

9

Fig. 11

Schnitt A-B

Fig. 10

Fig. *12a*

Fig. *12b*

EP 0 164 489 B1

Fig. 13

EP 0 164 489 B1

Fig. 14

Fig. 17

Fig. 15

Fig. 16

EP 0 164 489 B1

Fig. 18

Fig. 19

Fig. 20

EP 0 164 489 B1

Fig. 23

Fig. 24

Fig. 21

Fig. 22

Fig. 25

117

116

115

113

114

4'

4

2'  2  2'

Fig. 26

111

118

119

Auswurf

e

f

118

e

f

Auswurf

a

b

c

d

27

Fig. 27

Fig. 30

Abwicklung des Mantels

zur Presse

Einführung
für
Zweige, Laub, Gras

Einführung
für
Gehölze

Auswurf

Fig. 31

Abwicklung des Mantels

zur Presse

Einführung
für
Zweige, Laub, Gras

Einführung
für
Gehölze

Auswurf

Fig. 29

Schnitt C-D

128

5'

4

131

6

Fig. 28

Schnitt A-B